# EUROPÄISCHE PATENTSCHRIFT

(11) **EP 1 521 343 B1**
(45) Veröffentlichungstag und Bekanntmachung des Hinweises auf die Patenterteilung: **28.02.2007**
(21) Anmeldenummer: 03022313.5
(22) Anmeldetag: 03.10.2003
(51) Int. Cl.: H02G 1/12, H01R 43/28

(54) **Einrichtung und Verfahren zur Sensorauslösung von Kabeln**
Device and process for sensor triggering of cables
Dispositif et procédé de déclenchement à capteur pour câbles

(43) Veröffentlichungstag der Anmeldung: 06.04.2005
(73) Patentinhaber: Komax Holding AG, 6036 Dierikon (CH)
(72) Erfinder: Ruchti, Nicolas, 6330 Cham (CH)
(74) Vertreter: EGLI-EUROPEAN PATENT ATTORNEYS

(56) Entgegenhaltungen:
- DE-A- 3 902 697
- US-A- 4 601 093
- US-A- 4 745 828
- US-A- 5 140 873
- US-B1- 6 360 430

## Beschreibung

Die vorliegende Erfindung betrifft eine Einrichtung zum Auslösen eines Signals für den Fall, dass ein Kabelende eine bestimmte Position bezüglich seiner linearen Bewegung erreicht hat. Weiterhin betrifft die Erfindung ein Verfahren zum Auslösen eines solchen Signals.

Bei der Konfektionierung von Kabeln, insbesondere beim automatisierten Abisolieren von Leitern, ist das Problem bzw. die Notwendigkeit eines Vorgangs bekannt geworden, dass das Kabelende ein Signal auslösen soll, wenn es beim Einschieben in eine Abisoliervorrichtung eine bestimmte Vorwärtsposition erreicht hat. Zur Lösung des Problems sind dann z.B. in der US-A-4 745 828 Lösungen mit einem mechanischen Auslösesensor offenbart worden. Danach wird das abzuisolierende Leiterende auf einen mechanischen Auslösesensor - dort Fühler genannt - zubewegt, bis der Sensor anspricht, dann wird das Leiterende mit Hilfe von Spannbacken in seiner Position fixiert und das Leiterende wird zum Zwecke des Abisolierens in bekannter Weise eingeschnitten.

Der in der genannten Schrift vorgesehene Fühler mit seinem Anschlag ist für Leiter mit einem bestimmten Durchmesser und der damit verbundenen Auslösekraft auch durchaus in der Lage, die Sensorik zu übernehmen und den Fixierungs- und Abisolierungsvorgang auszulösen. Bei Leiterenden mit sehr geringem Durchmesser und der damit verbundenen minimalen Auslösekraft haben sich aber Probleme gezeigt, die es durch die Erfindung zu lösen gilt.

Es ist also die Aufgabe der Erfindung, einen Sensor und einen damit verbundenen Auslösemechanismus bereitzustellen, die dafür geeignet sind, insbesondere auch sehr dünne Leiterenden, die für eine mechanische Auslösung eine zu geringe Kraft aufbringen, zu detektieren. Der Sensor soll auch als mechanischer Anschlag dienen können.

Die Erfindung löst die Aufgabe durch eine Einrichtung nach Anspruch 1.

Die Einrichtung ermöglicht das Detektieren einer Anschlagstellung eines Leiterendes beim Längsverschieben mit einem im wesentlichen senkrecht zur Verschiebungsrichtung angeordneten piezoelektrischen Sensorelement und einer Auswerteelektronik, die mit einem elektrischen Ausgangssignal des piezoelektrischen Sensorelementes als Eingangssignal beaufschlagt wird und ein Auslösesignal als Funktion ihres Eingangssignals zur Verfügung stellt. Dabei haben die Massnahmen der Erfindung zunächst einmal zur Folge, dass mit dem der vorgeschlagenen Einrichtung auch sehr dünne Leiterenden detektiert werden können, wobei eine Anwendung dieser Einrichtung nicht nur auf sehr dünne Leiter beschränkt wäre. Der Sensor ist so angeordnet, dass er für die Weiterverarbeitung aus dem Bearbeitungsbereich weggefahren werden kann.

Überraschend hat sich herausgestellt, dass als Auslöseelektronik, also als Auswerteelektronik für das Signal des Piezoelementes, eine einfache Digitalisierungsschaltung ausreicht.

Die obige Aufgabe wird auch gelöst durch ein Verfahren zum Detektieren einer Anschlagstellung eines Leiterendes beim Längsverschieben mit einem im wesentlichen senkrecht zur Verschiebungsrichtung angeordneten piezoelektrischen Sensorelement und einer Auswerteelektronik nach Anspruch 6. Das Verfahren ist besonders vorteilhaft zum Auslösen eines Fixierungs- und Greifmechanismus für ein abzuisolierendes Leiterende verwendbar.

Weitere vorteilhafte Einzelheiten der Erfindung sind in den abhängigen Ansprüchen dargelegt.

Die vorgenannten sowie die beanspruchten und in den nachfolgenden Ausführungsbeispielen beschriebenen, erfindunggemäss zu verwendenden Elemente unterliegen in ihrer Grösse, Formgestaltung, Materialverwendung und technischen Konzeption keinen besonderen Ausnahmebedingungen, so dass die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der dazugehörigen Zeichnungen, in denen - beispielhaft - eine Einrichtung und ein dazugehöriger Verfahrensablauf zur vorliegenden Erfindung erläutert wird.

In den Zeichnungen zeigen:
- Fig. 1: eine Darstellung eines typischen piezoelektrischen Elementes,
- Fig. 2: eine Darstellung nach Fig. 1, bei der das Gehäuse getrennt vom eigentlichen Sensor gezeigt ist,
- Fig. 3: die Gesamtdarstellung der Einrichtung mit Piezosensor, Auswerteelektronik und Abnehmer eines digitalen Auslösesignals für den Beginn eines Abisolierprozesses,
- Fig. 4: ein typisches Signal des piezoelektrischen Elementes nach dem Berühren durch einen dünnen Draht;
- Fig. 5: das aus dem Signal von Fig. 4 abgeleitete digitale Signal,
- Fig. 6: ein Diagramm nach Fig. 4 mit Skala, und
- Fig. 7: ein Diagramm nach Fig. 5 mit Skala.

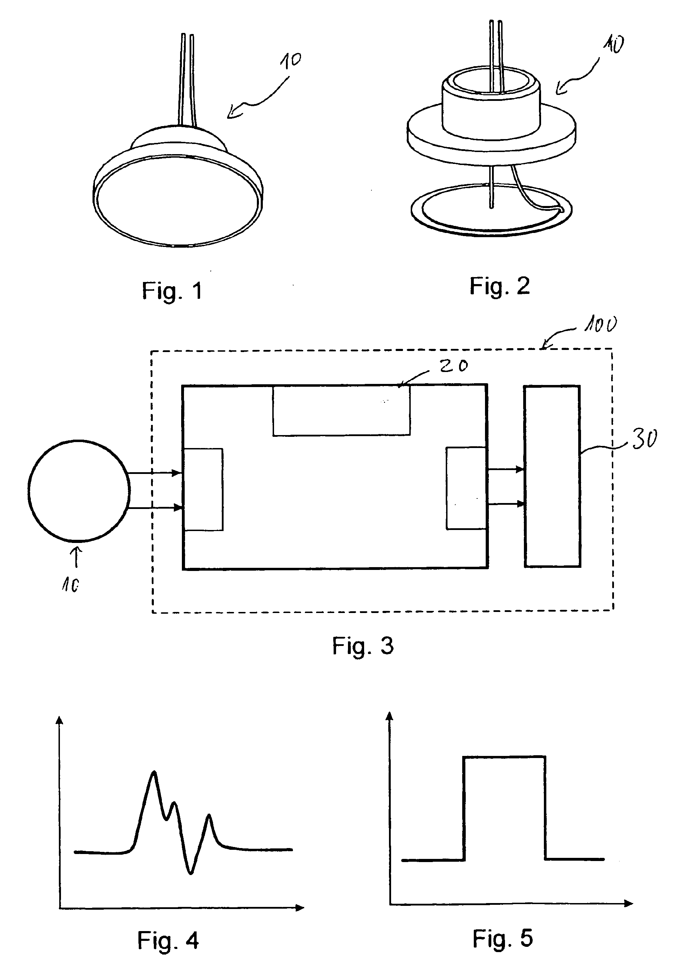

Die in Figur 3 als Ganzes mit 100 bezeichnete Einrichtung gemäss der vorliegende Erfindung stellt das bevorzugte Ausführungsbeispiel dar und besteht im wesentlichen aus einem gehäusten piezoelektrischen Sensorelement 10 und einer Auswerteelektronik 20. In dem im weiteren Text beschriebenen Ausführungsbeispiel kommt ein piezoelektrisches Element von Stelco (Typ SS 11-J9-000) zum Einsatz, es kann aber auch gegen jedes gleichwertige Element ausgetauscht werden.

Das piezoelektrische Sensorelement 10 wird gemäss dem Ausführungsbeispiel so angeordnet, dass das Leiterende den eigentlichen Sensor im wesentlichen senkrecht beaufschlagt. In Figur 4 ist ein typisches Signal dargestellt, welches vom piezoelektrischen Sensorelement nach dem Berühren durch das Leiterende ausgegeben wird.

Die Auswerteelektronik 20, die im Ausführungsbeispiel durch eine Versorgungseinheit mit 24 V elektrische versorgt wird, stellt nun ein digitales Signal (typisch: Schmidt-Trigger) mit einer Normhöhe und -breite zur Verfügung.

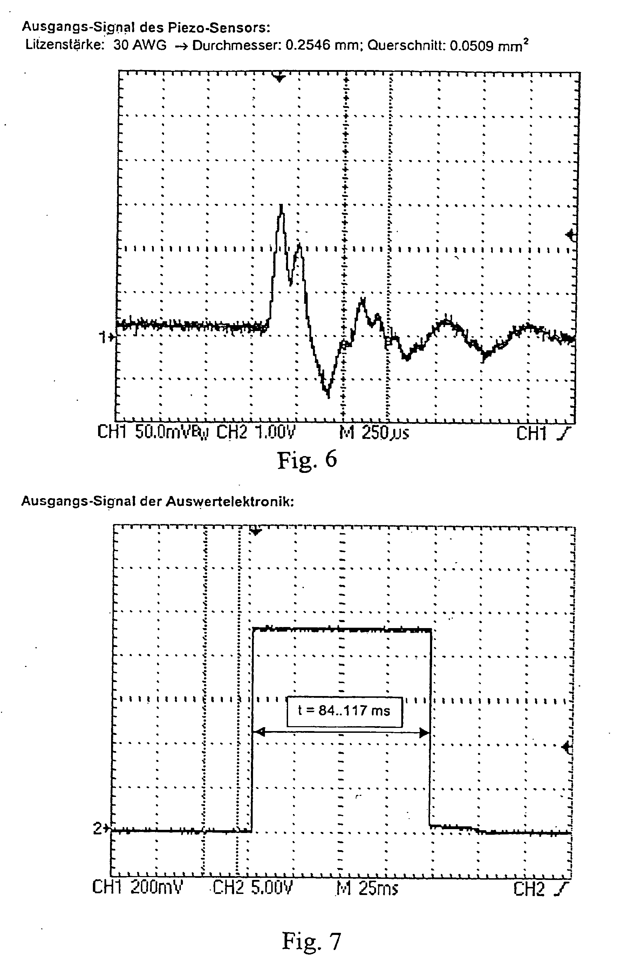

In Figur 6 ist das Ausgangssignal des piezoelektrischen Sensorelementes 10 als Oszillographendarstellung abgebildet. Dabei ist zu erkennen, dass durch das Berühren des Sensorelementes 10 mit dem Leiterende ein Nachschwingen ausgelöst wird, welches durch die Auswerteelektronik 20 normiert werden soll. Das Ausgangssignal der Auswerteelektronik 20 ist in Figur 7 dargestellt.

Das Ausgangssignal der Auswerteelektronik 20 wird im Ausführungsbeispiel einer Schnittstellenkarte 30 der Abisoliervorrichtung zur Verfügung gestellt. Diese Anordnung hat den Vorteil, dass die hier beschriebene Einrichtung modular gegen eine herkömmliche mechanische Einrichtung (wie z.B. in der US-A-4 745 828 angezogen) oder auch eine optische Auslöseeinrichtung etc. ausgetauscht werden kann, wenn nur jeweils ein ähnliches digitales Signal zur Verfügung steht.

Im Ausführungsbeispiel ist die Auswerteelektronik 20 so geschaltet, dass sie einerseits für eine bestimmte Zeit nach dem Auslösevorgang (z.B. 250 ms) kein weiteres Signal vom piezoelektrischen Sensorelement annimmt. Andererseits kann aber auch ein weiterer Eingang der Auswerteelektronik vorgesehen sein, der - allenfalls zusätzlich - die Auswerteelektronik sperrt, solange der Abisoliervorgang abläuft, bis das abisolierte Leiterende die Abisoliervorrichtung verlässt. Mit diesen Sperrmitteln wird ein unbeabsichtigtes Auslösen sehr unwahrscheinlich.

## Patentansprüche

1. Einrichtung zum Detektieren einer Anschlagstellung eines Leiterendes beim Längsverschieben,
**gekennzeichnet durch**
- ein im wesentlichen senkrecht zur Verschiebungsrichtung angeordnetes piezoelektrisches Sensorelement (10), und
- eine Auswerteelektronik (20), die mit dem elektrischen Ausgangssignal des piezoelektrischen Sensorelementes (10) als ihr Eingangssignal beaufschlagt wird und ein Auslösesignal als Funktion ihres Eingangssignals zur Verfügung stellt.

2. Einrichtung nach Anspruch 1, **dadurch gekennzeichnet, dass** die Auswerteelektronik (20) ein digitales Ausgangssignal zur Verfügung stellt.

3. Einrichtung nach Anspruch 2, **dadurch gekennzeichnet, dass** die Auswertelektronik (20) ein elektrisches Ausgangssignal des piezoelektrischen Sensorelementes (10) als ihr Eingangssignal nur entgegennimmt und verarbeitet, wenn eine Abisoliervorrichtung bereit ist, einen Abisoliervorgang zu beginnen.

4. Einrichtung nach Anspruch 2, **dadurch gekennzeichnet, dass** die Auswertelektronik (20) ein elektrisches Ausgangssignal des piezoelektrischen Sensorelementes (10) als ihr Eingangssignal für eine vorbestimmte Zeit nach dem letzten Auslösevorgang nicht entgegennimmt und verarbeitet.

5. Einrichtung nach einem der vorstehenden Ansprüche, **dadurch gekennzeichnet, dass** das piezoelektrische Sensorelement (10) zur Weiterverarbeitung nach dem Auslösevorgang verfahrbar angeordnet ist.

6. Verfahren zum Detektieren einer Anschlagstellung eines Leiterendes beim Längsverschieben, mit einem im wesentlichen senkrecht zur Verschiebungsrichtung angeordneten piezoelektrischen Sensorelement (10) und einer Auswerteelektronik (20), **gekennzeichnet durch** die folgenden Schritte:
- Heranführen des Leiterendes an das piezoelektrische Sensorelement (10) zum Auslösen eines elektrischen Ausgangssignals des piezoelektrischen Sensorelementes (10),
- Bereitstellen des elektrischen Ausgangssignal$des piezoelektrischen Sensorelementes (10) als Eingangssignal für die Auswerteelektronik (20), und
- Ausgeben eines Auslösesignals als Funktion des Eingangssignals.

7. Verfahren nach Anspruch 6, **dadurch gekennzeichnet, dass** die Auswerteelektronik (20) ein digitales Ausgangssignal ausgibt.

8. Verfahren nach Anspruch 7, **dadurch gekennzeichnet, dass** die Auswerteelektronik (20) das elektrische Ausgangssignal des piezoelektrischen Sensorelementes als ihr Eingangssignal nur entgegennimmt und ein digitales Ausgangssignal ausgibt, wenn eine Abisoliervorrichtung bereit ist, einen Abisoliervorgang zu beginnen.

9. Verfahren nach Anspruch 7 oder 8, **dadurch gekennzeichnet, dass** die Auswerteelektronik (20) für eine vorbestimmte Zeit nach dem letzten Auslösevorgang kein elektrisches Ausgangssignal des piezoelektrischen Sensorelementes als ihr Eingangssignal entgegennimmt und in dieser Zeit kein digitales Ausgangssignal ausgibt.

10. Verfahren nach einem der vorstehenden Ansprüche 6 bis 9, **dadurch gekennzeichnet, dass** das piezoelektrische Sensorelement (10) als Folge des Auslösesignals aus der Sensorposition weggefahren und nach der Beendigung eines Abisoliervorganges wieder in seine Sensorposition gefahren wird.

## Claims

1. A device for the detection of a stop position of a conductor end during the longitudinal displacement,
**characterised by**
- a piezoelectric sensor element (10) arranged essentially perpendicular to the displacement direction, and
- an evaluation electronics (20), which receives the electrical output signal of the piezoelectric sensor element (10) as its input signal and makes available a trigger signal as a function of its input signal.

2. The device according to claim 1, **characterised in that** the evaluation electronics (20) makes available a digital output signal.

3. The device according to claim 2, **characterised in that** the evaluation electronics (20) only accepts and processes an electrical output signal of the piezoelectric sensor element (10) as its input signal when a stripping device is ready to commence a stripping procedure.

4. The device according to claim 2, **characterised in that** the evaluation electronics (20) does not accept and process an electrical output signal of the piezoelectric sensor element (10) as its input signal for a predetermined time after the last stripping procedure.

5. The device according to any one of the preceding claims, **characterised in that** the piezoelectric sensor element (10) is arranged so as to be traversable for further processing after the triggering procedure.

6. A method for the detection of a stop position of a conductor end during the longitudinal displacement by means of a piezoelectric sensor element (10) arranged essentially perpendicular to the displacement direction and an evaluation electronics (20), **characterised by** the following steps:
- feeding of the conductor end towards the piezoelectric sensor element (10) for the triggering of an electrical output signal of the piezoelectric sensor element (10),
- making available the electrical output signal of the piezoelectric sensor element (10) as an input signal for the evaluation electronics (20), and
- outputting of a trigger signal as a function of the input signal.

7. The method according to claim 6, **characterised in that** the evaluation electronics (20) outputs a digital output signal.

8. The method according to claim 7, **characterised in that** the evaluation electronics (20) only accepts the electrical output signal of the piezoelectric sensor element as its input signal and outputs a digital output signal when a stripping device is ready to commence a stripping procedure.

9. The method according to claim 7 or 8, **characterised in that** the evaluation electronics (20) does not accept an electrical output signal of the piezoelectric sensor element as its input signal for a predetermined time after the last stripping procedure and does not output a digital output signal in this time.

10. The method according to any one of preceding claims 6 to 9, **characterised in that** the piezoelectric sensor element (10) is carried away out of the sensor position as a result of the trigger signal and is carried into its sensor position again after completion of a stripping procedure.

## Revendications

1. Installation pour la détection d'une position de butée d'une extrémité de conducteur lors d'un déplacement dans la longueur,
**caractérisée par**
- un élément sensoriel piézoélectrique (10) disposé principalement dans la verticale du sens de déplacement, et
- une électronique d'évaluation (20) qui est sollicitée par le signal électrique de sortie de l'élément sensoriel piézoélectrique (10) comme étant son signal d'entrée, et qui fournit un signal de déclenchement comme étant fonction de son signal d'entrée.

2. Installation selon la revendication 1, **caractérisée en ce que** l'électronique d'évaluation (20) fournit un signal de déclenchement digital.

3. Installation selon la revendication 2, **caractérisée en ce que** l'électronique d'évaluation (20) reçoit et traite un signal électrique de sortie venant de l'élément sensoriel piézoélectrique (10) comme étant son signal d'entrée, seulement lorsqu'un dispositif d'isolation est prêt à lancer un processus d'isolation.

4. Installation selon la revendication 2, **caractérisée en ce que** pendant un certain temps après le dernier processus de déclenchement, l'électronique d'évaluation (20) ne reçoit et ne traite pas le signal électrique de sortie venant de l'élément sensoriel piézoélectrique (10) comme étant son signal d'entrée.

5. Installation selon l'une des revendications ci-dessus, **caractérisée en ce que** l'élément sensoriel piézoélectrique (10) est placé en vue du traitement ultérieur au processus déclenchement.

6. Procédé pour la détection d'une position de butée d'une extrémité de conducteur lors du déplacement dans la longueur, avec un élément sensoriel piézoélectrique (10) principalement disposé dans la verticale du sens de déplacement, et avec une électronique d'évaluation (20), **caractérisé par** les étapes suivantes :
- mise en contact de l'extrémité de conducteur avec l'élément sensoriel piézoélectrique (10) afin de déclencher un signal électrique de sortie à partir de l'élément sensoriel piézoélectrique (10),
- mise à disposition d'un signal électrique de sortie de l'élément sensoriel piézoélectrique (10) comme signal d'entrée destiné à l'électronique d'évaluation (20), et
- émission d'un signal de déclenchement comme fonction du signal d'entrée.

7. Procédé selon la revendication 6, **caractérisé en ce que** l'électronique d'évaluation (20) produit un signal de sortie digital.

8. Procédé selon la revendication 7, **caractérisé en ce que** l'électronique d'évaluation (20) ne reçoit le signal de sortie électrique de l'élément sensoriel piézoélectrique (10) comme signal d'entrée et n'émet un signal de sortie digital que lorsqu'un dispositif d'isolation est prêt à commencer un processus d'isolation

9. Procédé selon la revendication 7 ou 8, **caractérisé en ce que** pendant un certain temps après le dernier processus de déclenchement, l'électronique d'évaluation (20) ne reçoit plus aucun signal de sortie électrique de l'élément sensoriel piézoélectrique (10) comme signal d'entrée et n'émet plus de signal de sortie digital.

10. Procédé selon l'une des revendications 6 à 9, **caractérisé en ce que**, l'élément sensoriel piézoélectrique (10) est éloigné de sa position de sensor suite au signal de déclenchement, puis remis dans sa position de sensor une fois que le processus d'isolation est terminé.
